# EUROPEAN PATENT APPLICATION

(11) **EP 1 086 772 A2**
(43) Date of publication of application: **28.03.2001**
(21) Application number: 00500197.9
(22) Date of filing: 07.09.2000
(51) Int. Cl.: B23K 3/03

(54) **Electric soldering iron**

(30) Priority: 23.09.1999 ES 9902105
(71) Applicant: JBC Industrias S.A., 08015 Barcelona (ES)
(72) Inventor: Benet Canals, Jaume, 08015 Barcelona (ES)
(74) Representative: Curell Aguilà, Marcelino

(57) **Abstract**

An electric soldering iron, comprising: [a] a cartridge (10) having a first conductor (1), a second conductor (2), a third conductor (3), a heating element (9), and a working tip (5), where the first and second conductors (1, 2) are electrically connected in series with the heating element (9), the first and third conductors (1, 3) are electrically connected to each other forming a thermocouple (8), which is located close to the working tip (5), where the first conductor (1) preferably has an end having an enlarged cross section, and where the second and third conductors (2, 3) are substantially hollow cylinders, b] a handle, and [c] a control device having a temperature measuring circuit including the thermocouple (8) and a heating circuit through which an electrical heating current may flow, where the heating element (9) is excluded from the temperature measuring circuit.

## Description

### Field of the Invention:

This invention relates to an electric soldering iron comprising: [a] a cartridge having a first conductor, a second conductor, a third conductor, a heating element, and a working tip, [b] a handle, and [c] a control device having a temperature measuring circuit including a thermocouple and a heating circuit through which an electrical heating current may flow, where the third conductor is substantially a hollow cylinder surrounding the first conductor and the second conductor.

### Prior Art:

The use of manual electric soldering irons, for soldering tin or like alloys, is well known. Thus, the 4-wire soldering irons are well known. These electric soldering irons have two independent circuits for measuring the temperature and for heating the tip. Nevertheless, the need to have 4 wires requires that the tip of said electric soldering irons is rather large, and the accuracy, both in the reading and the maintenance of the temperature is not optimal, and the response speed is slow.

Also known are electric heating elements having the temperature sensor and the heating element in series, in such a way that the entire ensemble is connected to the control device with two wires, as described in EP-A-0 001 542, where there is described a temperature regulating device in which the heating element and the temperature sensor, to be precise a thermocouple, are physically the same member. The control device sends the heating energy in pulse form and reads the temperature sensor output signal between each pair of pulses. This device may be used in very small items of equipment, for example in very small soldering iron tips.

According to GB 2,138,297, the above concepts are applied to a U-shaped cauterizing element. The U has a smaller cross section in the center portion of the U and a heating current passes therethrough. This heating current meets with a greater resistance in the portion of smaller cross section which, therefore, heats up more than the rest of the U. A conductor of a different material than the U is attached to the U at the smaller cross section portion, thereby forming a thermocouple at said point of attachment, which is where the highest temperature is attained. The possibility is also considered of the U being formed by two conductor elements made from different materials, whereby there is simultaneously obtained the function of heating element and the function of temperature sensor.

EP 0 202 401 describes a similar concept, applied to the tips of soldering irons. There is described particularly the fact that the temperature sensor and the heating element are connected in series and that, therefore, the signal reaching the control circuit is the combination of the signal generated by both members. A thermoresistor and a thermocouple are stated to be possible examples of temperature sensors.

US-A-5,043,560 describes another similar concept, wherein a heating tip is provided with a heating element connected in series with a conductor of a different material, in such a way that this joint forms a thermocouple. A control system also sends the heating energy in pulse form and reads the temperature sensor signal between each pair of pulses. This document also describes several variations of the control device in detail.

The fundamental object of the present invention is to provide a soldering iron having a very quick and very accurate response. Namely, the soldering iron must attain the working temperature very quickly once switched on and must hold this temperature stable during the soldering process. Likewise, the temperature must be very precise. In this way, waiting periods should be avoided and also temperature fluctuations while soldering should be avoided or even the fact that the tip cools down excessively when a large number of soldering operations are performed successively. Also, the use of soldering irons, particularly the smaller sized ones, preferably for soldering electronic components, many of which are very heat sensitive, makes it desirable for the temperature to be held at a very precise level and that the soldering action be performed as quickly as possible, which requires the soldering iron to be able to deliver a great amount of energy quickly.

An absolutely necessary condition to be able to attain the foregoing objectives is to achieve a reduction of the size of all the component parts of the soldering iron tip, since this means that smaller masses and, therefore, a lower thermal inertia are involved. In this way, an aid is provided for obtaining a speedy reading of any temperature variation and also a rapid response of heat supply to the soldering iron tip.

It is also very important to achieve an optimized geometric configuration, helping to reduce the masses and which optimizes the arrangement of the various elements, for example, moving the temperature sensor as closely as possible to the end making contact with the solder.

In all the above described cases, there is observed a saving in one or two conductors, whereby there is achieved a reduction of space, with the condition that the heating and temperature measuring functions are combined in the same physical members, i.e., to be precise, that the heating element is used both in its function of generating heat on the passage of an electric current and in its capacity of forming a thermocouple when connected with another conductor and thereby generate an electrical voltage variable with the temperature.

Although it is true that any conductor generates heat when an electric current flows therethrough, nevertheless only certain alloys well known in the art are industrially used for making heating elements, since they appropriately combine electrical, mechanical, heat and oxidation resistance, etc. properties.

Likewise, only the combination of certain pairs of conductive elements form thermocouples of industrial interest, and only a few of these are of high precision. Therefore, the requirement that a conductive material should simultaneously fulfil the functions of heating element and component of a thermocouple seriously limits the appropriate materials and requires a sacrifice of accuracy in temperature measurement and performance of the heating element.

It is also frequent that one of the conductors has a tubular-shaped portion physically surrounding the remaining components of the soldering iron tip. This portion is exposed to the exterior, whereby there is the risk that it be touched by the user and/or by the environment. In this sense, this portion is desirably not under tension (preferably at the most 2 mV/r.m.s (root mean square value)), whereby said conductor is usually connected to the earth of the control device. Nevertheless, since the electric heating current flows through said conductor, and the heating current may provide high intensity peaks, a voltage drop which may exceed 2 mV/r.m.s. is generated in this same conductor, in view of its resistivity.

### Summary of the Invention:

It is an object of the invention to overcome these drawbacks. This object is achieved with an electric soldering iron of the type first mentioned above, wherein: [i] the first and second conductors are electrically connected in series with the heating element and form part of the heating circuit, [ii] the first and third conductors are electrically connected to each other forming the thermocouple, [iii] the thermocouple is located close to the working tip, [iv] the heating element is excluded from the temperature measuring circuit, and [v] the second conductor is substantially a hollow cylinder at least partly surrounding the first conductor.

In this way, in fact, the following benefits are obtained:
- freedom to form the thermocouple with the most appropriate conductors,
- the most appropriate material may be selected for the heating element, since it no longer forms part of the thermocouple,
- the heating current does not flow through the third conductor, which is the one surrounding the remaining elements and which is the one which may be accessible from the outside, whereby no voltage drop is formed therein,
- the thermocouple may be located very close to the end making contact with the solder, whereby it indicates the temperature at said end with great accuracy and very quickly detects changes in said temperature,
- the geometric form allows the elements to be grouped together in a very small space, whereby cartridges may be made having very small working tips, which minimizes the thermal inertia, thereby providing for a quick reading of the temperature differences and a rapid transmission of the energy from the heating element to the working tip.

The first conductor preferably is provided with an end of enlarged cross section where the connection between the enlarged cross section end and the third conductor forms the thermocouple. This allows for a better joint and a more real, precise reading of the temperature, whereby the accuracy of the temperature control in enhanced. It is particularly preferred to shape this enlarged cross section with a perimeter coinciding substantially with the cross section of the third conductor, practically closing the end of the third conductor.

Soldering irons frequently have a sheath, the tip of which is the working tip, in which case the sheath preferably has a cavity, the bottom of which is close to the working tip. It is then advantageous to house the heating element and the thermocouple inside the cavity and, specifically, to position the thermocouple in the bottom of the cavity. Thus, it is in the end closest to the working tip.

It is advantageous to connect the heating element to the first conductor precisely at the end of enlarged cross section, thereby closing the heating circuit.

It is also preferred that the heating current should flow through the first and second conductors and the heating element, but without flowing through the third conductor. This prevents voltage drops being generated in the third conductor and, therefore, makes it possible to prevent the maximum voltage in the third conductor from exceeding 2 mV/r.m.s.

A preferred embodiment of the soldering iron according to the invention is achieved when: [a] the first conductor is substantially a rod and the enlarged cross section end is substantially a flat disc, housed in the bottom of the sheath and having a substantially circumferential perimeter, [b] the heating element is a rod wound in spiral around the first conductor, with one end attached to the disc and with the opposite end attached to the second conductor, and [c] the third conductor is a hollow cylinder, the end of which is attached to the perimeter of the disc. In this way, it is possible to combine all the aforementioned advantages in an extremely small space, allowing the masses and, therefore, the thermal inertia thereof to be reduced.

Finally, the control device advantageously includes a comparator member which compares the temperature measurement of the thermocouple with a user preset temperature and transmits this comparison to the heating circuit and the heating circuit adjusts the electrical power supplied to the heating element depending on this comparison.

### Brief Description of the Drawing

Further advantages and features of the invention will be appreciated from the following description wherein, without any limiting nature, there is described one preferred embodiment of the invention, with reference to the accompanying drawing, in which:

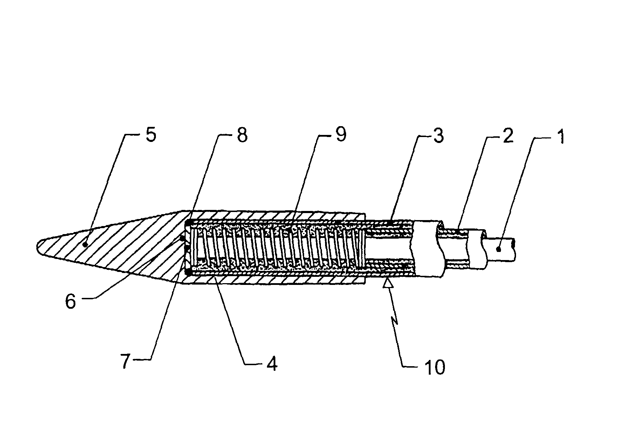

Figure 1 is a cross section view of an electric soldering iron cartridge according to the invention.

### Detailed Description of the Drawing

The cartridge 10 of the soldering iron of Figure 1 has a first conductor 1, which is substantially a cylindrical rod, a second conductor 2 which is a hollow cylinder surrounding the first conductor 1, and a third conductor 3 which is a further hollow cylinder surrounding the second conductor 2. At the end of the cartridge 10 there is a copper sheath 4 having a cylindrical cavity and a conical tip, forming the working tip 5. The cylindrical cavity has an open end and extends inside the sheath 4 up to a point close to the working tip 5, where it defines a bottom wall 6. The third conductor 3 is inserted by one of the ends thereof, which is open, in the cavity up to the bottom wall 6. The first conductor 1 is also inserted up to the bottom wall 6 of the cavity and is provided with an enlarged cross section 7 at the end thereof, i.e., a disc-shaped widening, the outer perimeter of which coincides with the edge of the third conductor 3. The first conductor 1 and the third conductor 3 are electrically connected together at said perimeter, forming a thermocouple 8. The second conductor 2 is also inserted in the cavity, between the first conductor 1 and the third conductor 3, but does not reach the bottom wall 6, but stops short at an intermediate point. A heating element 9, formed by a helically wound rod forming a spiral which is heated on an electric current flowing therethrough and has an inside diameter greater than the diameter of the first conductor 1 and an outside diameter smaller than the diameter of the third conductor 3 is housed between the end of the second conductor 2 and the disc. The heating element 9 is electrically connected to the second conductor 2 at one end and to the first conductor 1, to be precise on the disc, at the other end. Between the first conductor 1, the second conductor 2, the third conductor 3 and the heating element 9 there are spaces which are filled with insulating material.

## Claims

1. An electric soldering iron, comprising: [a] a cartridge (10) having a first conductor (1), a second conductor (2), a third conductor (3), a heating element (9), and a working tip (5), [b] a handle, and [c] a control device having a temperature measuring circuit including a thermocouple (8) and a heating circuit through which an electrical heating current may flow, where said third conductor (3) is substantially a hollow cylinder surrounding said first conductor (1) and second conductor (2), wherein: [i] said first conductor (1) and second conductor (2) are electrically connected in series with said heating element (9) and form part of said heating circuit, [ii] said first conductor (1) and said third conductor (3) are electrically connected to each other forming said thermocouple (8), [iii] said thermocouple (8) is located close to said working tip (5), [iv] said heating element (9) is excluded from said temperature measuring circuit, and [v] said second conductor (2) is substantially a hollow cylinder at least partly surrounding said first conductor (1).

2. The electric soldering iron of claim 1, wherein said first conductor (1) has an end having an enlarged cross section (7) where the connection between said enlarged cross section end (7) and said third conductor (3) forms said thermocouple (8).

3. The electric soldering iron of claim 1 or claim 2, having a sheath (4) comprising said working tip (5) and a cavity, said cavity having a bottom wall (6) close to said working tip (5).

4. The electric soldering iron of claim 3, wherein said cavity is for housing at least in part said heating element (9) and said thermocouple (8).

5. The electric soldering iron of claim 3 or claim 4, wherein said thermocouple (8) is located at said bottom wall (6).

6. The electric soldering iron of at least one of claims 1 to 5, wherein said enlarged cross section end (7) is provided with a perimeter coinciding substantially with the cross section of said third conductor (3).

7. The electric soldering iron of at least one of claims 1 to 6, wherein said heating element (9) is attached to said first conductor (1) at said enlarged cross section end (7), thereby closing said heating circuit.

8. The electric soldering iron of at least one of claims 1 to 7, wherein said heating current flows through said first conductor (1) and second conductor (2) and said heating element (9), said third conductor (3) being free from the flow of said heating current.

9. The electric soldering iron of at least one of claims 3 to 8, wherein: [a] said first conductor (1) is substantially a rod and said enlarged cross section end (7) is substantially a flat disc, housed in said bottom wall (6), and having a substantially circumferential perimeter, [b] said heating element (9) is a rod wound in spiral around said first conductor (1), with one end attached to said disc and with the opposite end attached to said second conductor (2), and [c] said third conductor (3) is a hollow cylinder, the end of which is attached to said perimeter of said disc.

10. The electric soldering iron of at least one of claims 1 to 9, wherein said the control device includes a comparator member which compares said temperature measurement of said thermocouple (8) with a user preset temperature and transmits said comparison to said heating circuit.

11. The electric soldering iron of claim 10, wherein said heating circuit adjusts the electrical power supplied to said heating element (9) depending on this comparison.
